# EUROPÄISCHE PATENTSCHRIFT

(11) **EP 1 139 717 B1**
(45) Veröffentlichungstag und Bekanntmachung des Hinweises auf die Patenterteilung: **02.05.2003**
(21) Anmeldenummer: 99963232.6
(22) Anmeldetag: 13.11.1999
(51) Int. Cl.: A01G 1/00

(54) **VEGETATIONSELEMENT ZUR BEGRÜNUNG KÜNSTLICHER ODER NATÜRLICHER FLÄCHEN UND VERFAHREN ZU DESSEN HERSTELLUNG**
VEGETATION ELEMENT FOR GREENING ARTIFICIAL OR NATURAL SURFACES AND METHOD FOR PRODUCING SAME
ELEMENT DE VEGETATION POUR FAIRE CROITRE DES VEGETAUX SUR DES SURFACES ARTIFICIELLES OU NATURELLES, ET PROCEDE DE REALISATION DE CET ELEMENT

(30) Priorität: 31.12.1998 DE 19860914
(43) Veröffentlichungstag der Anmeldung: 10.10.2001
(73) Patentinhaber: Behrens, Wolfgang, 27243 Gross Ippener (DE)
(72) Erfinder: Behrens, Wolfgang, 27243 Gross Ippener (DE)
(74) Vertreter: Thömen, Uwe, Dipl.-Ing.
(86) Internationale Anmeldenummer: DE9903619
(87) Internationale Veröffentlichungsnummer: WO00040073

(56) Entgegenhaltungen:
- DE-A- 2 358 931
- DE-B- 1 126 663
- DE-U- 29 712 457
- US-A- 2 605 589
- US-A- 4 941 282

## Beschreibung

Die Erfindung betrifft ein Vegetationselement zur Begrünung künstlicher oder natürlicher Flächen mit zweikeimblättrigen Pflanzen gemäß dem Oberbegriff des Patentanspruchs 1 und ein Verfahren zu dessen Herstellung.

Es ist eine Vielzahl derartiger Vegetationselemente bekannt, beispielsweise aus der DE 36 31 716 C2, der DE 42 19 275 C2, der EP 0 706 753 A1 und der DE 195 23 406 C1, welche insbesondere zur extensiven Begrünung von Dächern verwendet werden und sich weitgehend bewährt haben. Bei diesen Vegetationselementen wird ein mattenförmiges Element, welches aus Kokosfasern, aus Mineralwollfasern, aus Kunstfasern bzw. aus Matten dieser Gemische bestehen kann, entweder vor Aufbringen auf die zu begrünende Fläche vorkultiviert und gärtnerisch gepflegt oder erst nach Aufbringen auf die zu begrünende Fläche mit Samen, Sprossen, Sporen oder sonstigem keimfähigem Pflanzenmaterial zweikeimblättriger Pflanzen versehen. Es ist auch bekannt, Matten zu verwenden, in welche Substrat und Pflanzensamen und Pflanzensprossen eingebracht sind, bzw. bei denen die Sprossen auf die Matte aufgesteppt sind, wobei jeweils vorgesehen ist, daß die Matten dem Aufbringen auf die zu begrünende Fläche sich sozusagen selbst überlassen werden.

Insbesondere bei Vegetationselementen, die vor Aufbringen auf die zu begrünende Fläche vorkultiviert werden, entstehen hohe Kosten. Denn die Trägermatten selbst sind relativ teuer und die gärtnerische Pflege ist arbeitsintensiv und damit ebenfalls mit relativ hohen Kosten verbunden. Desweiteren können hohe Entsorgungskosten bei einer eventuellen Räumung des Daches entstehen.

Es besteht seit langem ein Bedarf danach, die Kosten für derartige Vegetationselemente zu reduzieren.

Aufgabe der Erfindung ist es daher, ein Vegetationselement der eingangs geschilderten Art zu schaffen, welches preiswert ist, möglichst geringe manuelle Bearbeitung erfordert, und welches maschinell bearbeitbar sein soll.

Diese Aufgabe wird mit einem Vegetationselement zur Begrünung künstlicher oder natürlicher Flächen mit zweikeimblättrigen Pflanzen geschaffen, welches die Merkmale des kennzeichnenden Teils des Patentanspruchs 1 aufweisen.

Erfindungsgemäß ist vorgesehen, daß der Träger ein Netz, ein Gewebe, ein Gewirke, oder ein Fasergemisch ist, welcher auf einen natürlich gewachsenen, oder künstlich hergestellten, mineralischen Boden auflegbar ist, wobei der Boden keimfrei hergerichtet ist, und daß das Bodenverbesserungssubstrat mit Druck oder durch Vermischung in eine obere Schicht des Boden eingearbeitet ist, wobei der pH-Wert des Substrats vom pH-Wert des Bodens abweichen kann bzw. abweicht und auf die physiologischen Bedürfnisse der zweikeimblättrigen Pflanzen abgestimmt ist, so daß eine Mischungsschicht aus Boden und Substrat entsteht, welche eine Trennlinie zum darunter angeordneten, unvermischten Boden aufweist, und daß in die Mischungsschicht keimfähiges Pflanzenmaterial der zweikeimblättrigen Pflanzen eingebracht ist, deren sich bildende Wurzeln sich in der Mischungsschicht und am Träger verankern, und daß das Vegetationselement maschinell schälbar ist.

Kurz gefaßt, wird die Aufgabe auf überraschend einfach Weise dadurch gelöst, daß ein Vegetationselement geschaffen wird, das bekannten Vegetationselementen zur Begrünung von Flächen mit einkeimblättrigen Pflanzen, d.h. Fertigrasen oder Rollrasen, in vorteilhafter Weise auf die morphologischen Verhältnisse zweikeimblättriger Pflanzen angepaßt und erweitert ist.

Denn im Bereich sogenannter Rollrasen oder Fertigrasen, wie sie beispielsweise aus der DE 42 30 312 A1, der DE-OS 23 58 931 und der DE 297 12 457 U1 bekannt sind, werden Vegetationselemente zur intensiven Begrünung geschaffen, die äußerst preiswert sind und welche maschinell geerntet, d.h. geschält und aufgerollt werden können. Einkeimblättrige Pflanzen, insbesondere Gräser, bilden einen sogenannten Wurzelfilz aus, der es ermöglicht, daß der Rasen geschält werden kann, ohne daß es nötig wäre, eine kostspielige Fasermatte als Trägermaterial für den Rollrasen zu verwenden. Der Wurzelfilz ist dabei so dicht und fest, daß er allein eine ausreichende Stabilität des Rollrasen gewährleistet.

Morphologisch bedingt, sind derartige Fertigrasen nur mit einkeimblättrigen Pflanzen realisierbar. Zweikeimblättrige Pflanzen, beispielsweise Sedum-Arten wie Sedum acre, Sedum album, Sedum dasyphyllum, Sedum sexangulare, Sempervivum arachnoideum u. a., bilden nämlich keinen dichten Wurzelfilz aus, welcher eine ausreichende Stabilität allein gewährleisten würde. Daher hat man auch bislang relativ dicke und insbesondere teure Träger verwenden müssen, um einen ausreichenden Zusammenhalt der Pflanzdecke und des Vegetationselementes insgesamt zu gewährleisten.

Die Leistung des Erfinders ist insbesondere darin zu sehen, daß er gezielt eine bestimmte Abfolge von Verfahrensschritten entwickelt hat, durch welche man zu einem Vegetationselement gelangen kann, das im strukturellen Aufbau zwar dem Rollrasen ähnelt, aber mit zweikeimblättrigen Pflanzen versehen ist, welche sich eigentlich nicht zur entsprechenden Kultivierung eignen. Dieses scheinbare Paradoxon wird insbesondere durch ein Verfahren gemäß dem Anspruch 17 aufgelöst.

Zur Abgrenzung gegen einkeimblättrige Pflanzen (Monokotyledonen), insbesondere Gräser, werden nachfolgend mit dem Begriff "zweikeimblättrige Pflanzen" nicht nur echte Dikotyledonen verstanden, sondern auch Sporenpflanzen, wie Farne, Moose und Bärlappgewächse, und Flechten. Diese sind zwar in biologischer Hinsicht keine zweikeimblättrigen Pflanzen, sie zeichnen sich aber in technischer Hinsicht, ebenso wie die Dikotyledonen, dadurch aus, daß sie keinen dichten Wurzelfilz bilden.

Der Erfinder hat erkannt, daß es möglich ist, die bei der Herstellung von Fertigrasen verwendete Technik auf das Gebiet der künstlichen Begrünung mit zweikeimblättrigen Pflanzen, insbesondere der schwach wurzelnden Sukkulenten (Sedum-Arten), Kräutern, Moosen, Farnen, Flechten und dergleichen, zu übertragen, was bislang für nicht möglich gehalten wurde. Er hat insbesondere erkannt, daß es wichtig ist, daß der mineralische Boden (Mutterboden) auf welchem die Kultivierung des Vegetationselementes erfolgt, keimfrei sein muß. Anderenfalls würden im Boden befindliche unerwünschte Pflanzenarten von unten nach oben in den Vegetationsträger einwachsen und damit die entsprechende Kultivierung des Vegetationselementes zerstören. Hierbei ist mit Keimfreiheit nicht nur eine Bodendesinfektion gemeint, da hierbei lediglich tierische Schädlinge, insbesondere Nematoden, und Mikroorganismen abgetötet werden. Wichtig ist insbesondere das vollständige Abtöten von Unkrautsamen, -keimen und unerwünschten Pflanzenteilen, wie beispielsweise Pflanzenteile der Quecke (Agropyron repens).

Zwar kann ein späteres, unerwünschtes Ansiedeln von Gräsern und Seggen, insbesondere durch Flugsamen, nicht immer ausgeschlossen werden. Insofern ist auch zu betonen, daß das fertige Vegetationselement nach Abschluß der Kultivierungsmaßnahmen auch weniger als 100 % zweikeimblättriger Pflanzen aufweisen kann. In der kritischen Keim- und Anwuchsphase ist aber der keimfreie Zustand des Bodens von großer Wichtigkeit, da etwa in den Vegetationsträger einwachsende Gräser den zweikeimblättrigen Pflanzen den Wurzelraum, sowie den Wasserund Nährstoffhaushalt streitig machen würden, wodurch die Kultivierungsmaßnahmen zunichte gemacht werden könnten.

Desweiteren wurde erkannt, daß das Einbringen eines speziell auf die physiologischen Bedürfnisse der zweikeimblättrigen Pflanzen abgestimmten Bodenverbesserungssubstrats bzw. Pflanzensubstrats notwendig ist, wobei das Substrat so eingebracht werden muß, daß das Substrat nicht tiefer als etwa 2 cm in den Boden eindringt. Anderenfalls könnte nämlich der pH-Wert des anstehenden Bodens - in der Regel ein sonst landwirtschaftlich genutztes Feld bzw. ein Acker oder ein künstlich erzeugter und aufgeschütteter Boden- auf Dauer so geschädigt werden, daß der anstehende Boden für eine weitere landwirtschaftliche Nutzung unbrauchbar wird. Ferner ist ein begrenztes Eindringen des Substrates in den anstehenden Boden wichtig, um eine mehr oder weniger scharfe Trennlinie zwischen der Mischungsschicht und dem unvermischten anstehenden Boden zu schaffen.

Diese Trennlinie wird benötigt, um das Vegetationselement maschinell schälen zu können und um die Einwurzeltiefe zu halten, damit bei der Ernte so wenig Wurzeln wie möglich gekappt werden.

Ferner ist eine begrenzte Eindringtiefe des Substrats in die Mischungsschicht beim Verdichten aus dem Grunde wichtig, da sonst auch der Träger zu tief in den Boden eindringen würde und dann beim abschließenden Schälen durch die Schälmesser der Maschinen beschädigt oder gar zerstört werden könnte.

Ganz entscheidend zur technischen Realisierung des erfindungsgemäßen "Rollrasens" aus zweikeimblättrigen Pflanzen ist schließlich der Träger, welcher bei der Erfindung als Ankerpunkt für die Wurzeln der zweikeimblättrigen Pflanzen dient. Die Verwendung von beispielsweise als PP-Netz oder Vlies ausgebildeten Trägern ist zwar an sich aus dem Stand der Technik bekannt, dort dienen die Träger aber ausschließlich zur Armierung der Vegegetationselemente bei Verlegung auf geneigten Flächen, wo die Träger der Aufnahme von entstehenden Zugkräften dienen.

In praktischen Versuchen hat sich ergeben, daß sich mit einem derart ausgebildeten Vegetationselement Schälbreiten von 25 cm bis 2,5 m und Schällängen von 50 cm bis 35 m realisieren lassen.

Insbesondere die maschinelle Schälbarkeit eines derartigen Vegetationselementes senkt die Kosten zur Herstellung eines derartigen Vegetationselementes drastisch. Denn insbesondere das bislang erforderliche Schneiden und Aufrollen von Hand war sehr arbeitsintensiv und daher mit hohen Kosten verbunden. Bisher erfolgte die Kultivierung der Vegetationsträger auf einer Trennfolie, welche die den Vegetationsträger bildende Vegetationsmatte vom anstehenden Boden trennt, damit die Pflanzen nicht in den Boden einwurzeln können. Durch die Folien kann es aber zu Staunässe kommen, durch welche die Vegetation beschädigt oder zerstört werden kann. Dies hat man bislang dadurch zu vermeiden versucht, daß entsprechende Vegetationsträger mit einer maximalen Länge von 15 m auf einem - im Bedarfsfalle künstlich angelegten - Gefälle angebaut wurden.

Diese Gefahr kann durch den erfindungsgemäßen Vegetationsträger ausgeräumt werden. Denn der anstehende Boden stellt eine natürliche Drainage dar, durch welche Staunässe vermieden werden kann. Zudem kann die Kultivierung nun in beliebiger Flächenausdehnung und ohne Flächenneigung erfolgen.

In vorteilhaften Ausgestaltungen der Erfindung ist vorgesehen, daß den zweikeimblättrigen Pflanzen Moose, Farne, Flechten und/oder Monokotyledonen beigemischt sind.

In praktischen Ausgestaltungen der Erfindung ist vorgesehen, daß die Mischungsschicht eine Dicke von 1 cm bis 3 cm aufweist, daß ferner der Träger ein Netz ist oder daß der Träger ein Gewebe oder ein Fasergemisch ist. Hierbei kann vorgesehen sein, daß der Träger aus verrottbarem Material oder aus Kunststoff besteht.

Bezüglich des Bodenverbesserungssubstrats kann vorgesehen sein, daß das Substrat eine Mischung entsprechend der DE 40 04 284 C1, eine Mischung entsprechend der EP 0 383 109 B1, oder daß das Substrat eine unter dem Handelsnamen Bio-Stucco erhältliche Substratmischung ist. Dabei kann in weiteren praktischen Ausgestaltungen der Erfindung vorgesehen sein, daß die Korngrößenfraktionen des Substrates im Bereich von 0,006 bis 35 mm liegen. In jedem Falle sollte erreicht werden, daß das aus der Vermischung des anstehenden Bodens mit dem Substrat resultierende Endsubstrat Substraten gemäß den Richtlinien für die Planung, Ausführung und Pflege von Dachbegrünungen der FLL, Ausgabe 1995, Punkt 9 "Vegetationstragschicht", entspricht oder zumindest nahekommt.

Ferner kann in weiteren praktischen Ausgestaltungen der Erfindung vorgesehen sein, daß der Boden ein Braunerdeboden ist.

Ein erfindungsgemäßes Verfahren zur Herstellung des Vegetationselementes gemäß Anspruch 1 ist durch folgende Verfahrensschritte gekennzeichnet:
a) der anstehende Boden wird verdichtet,
b) der Boden wird keimfrei hergerichtet,
c) der Träger wird auf den Boden aufgelegt,
d) das Substrat wird auf den Träger aufgeschüttet,
e) das Substrat wird unter Druck zumindest teilweise durch den Träger in den Boden eingearbeitet und verdichtet,
f) das keimfähige Pflanzenmaterial der zweikeimblättrigen Pflanzen wird eingesät,
g) das Vegetationselement wird gärtnerisch gepflegt,
h) das Vegetationselement wird maschinell geschält.

Insbesondere der Verfahrensschritt b ist von großer Bedeutung. Wäre der anstehende Boden nämlich noch mit Keimen (Diasporen), insbesondere mit Sämereien von einkeimblättrigen und/oder unerwünschten zweikeimblättrigen Pflanzen behaftet, würde diese nach oben wachsen und die Bemühungen zur Schaffung des Vegetationselementes für zweikeimblättrige Pflanzen zunichte machen. Daher muß, was durch den Erfinder erkannt wurde, der Boden zunächst keimfrei gemacht werden. Gemäß einer praktischen Ausführungsform der Erfindung ist dabei vorgesehen, daß der Boden mit einem unter dem Handelsnamen Basamid bekannten Mittel keimfrei gemacht wird. Bei Basamid handelt es sich um ein Dazomet in Granulatform.

Gemäß einer weiteren Ausgestaltung des Verfahrens ist dann vorgesehen, daß das Substrat 1 bis 2 cm tief in den Boden eingearbeitet und verdichtet wird. Diese Tiefe hat sich bewährt, da ein nur etwa 1 cm tiefes Eindringen des Substrats in den Boden mit anschließender Verdichtung zum einen gewährleistet, daß eine mehr oder weniger scharfe Trennlinie zwischen der Mischungsschicht und dem darunter liegenden anstehenden Boden entsteht, und daß das Substrat nicht so tief eindringen kann, daß der pH-Wert des anstehenden Bodens in irgendeiner Weise negativ beeinflußt werden könnte.

Ein alternatives Verfahren zur Herstellung eines Vegetationsträgers zeichnet sich durch folgende Verfahrensschritte aus:
a) der anstehende Boden wird verdichtet,
b) der Boden wird keimfrei hergerichtet,
c) Substrat wird auf den Boden aufgeschüttet,
d) das Substrat wird in den Boden eingearbeitet und verdichtet,
e) der Träger wird auf den Boden aufgelegt,
f) das keimfähige Pflanzenmaterial der zweikeimblättrigen Pflanzen wird eingesät oder aufgestreut,
g) das Vegetationselement wird gärtnerisch gepflegt,
h) das Vegetationselement wird maschinell geschält.

In Weiterbildungen dieses Verfahrens kann dann vorgesehen sein, daß der Träger mechanisch in die darunter befindliche Schicht eingearbeitet wird und/oder daß der Träger durch Ausstreuen einer Schicht von Substrat festgelegt wird.

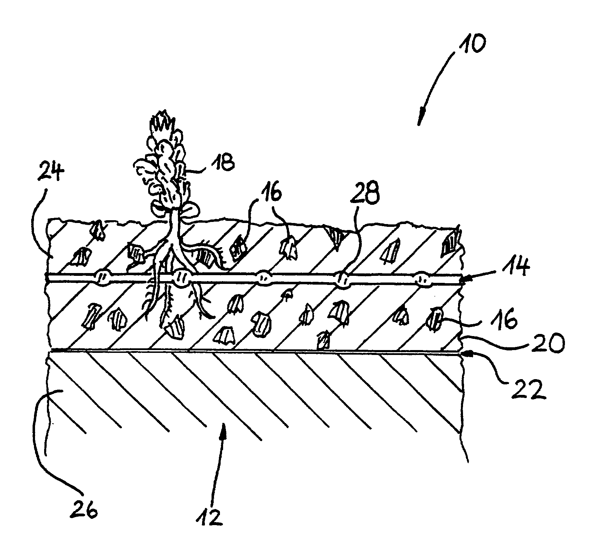

Die Erfindung wird näher anhand der Patentansprüche und anhand eines in der Zeichnung dargestellten Ausführungsbeispiels eines erfindungsgemäßen Vegetationselements beschrieben.

In der Zeichnung ist im Querschnitt der Ausschnitt eines erfindungsgemäßen Vegetationselementes 10 dargestellt. Das Vegetationselement 10 weist einen Träger 14 in Form eines PP-Netzes 28 auf, welches auf einen anstehend gewachsenen Boden 12 aufgelegt wurde.

Der Boden 12 kann ein lehmiger, ein anlehmiger, ein sandiger, ein ansandiger, ein schluffiger oder ein anderer Boden sein, welcher durch Einarbeiten von Bodenverbesserungssubstrat 16 an die physiologischen Ansprüche der einzubringenden zweikeimblättrigen Pflanzen 18 angepaßt wird.

Das Auflegen des im Ausführungsbeispiel als PP-Netz 28 ausgebildeten Trägers 14 erfolgt erst, nachdem der Boden 12 keimfrei gemacht wurde, beispielsweise durch eine Vergasung mit einem unter der Bezeichnung Basamid bekannten Mittel. Nach dem Auflegen des PP-Netzes 28 auf eine obere Schicht 24 des Bodens 12 wird Bodenverbesserungssubstrat 16 auf den Träger 14 aufgeschüttet, verdichtet und in die obere Schicht 24 des Bodens 12 eingearbeitet. Beim Einarbeiten des Bodenverbesserungssubstrats 16 wird auch das PP-Netz 28 in die obere Schicht 24 des Bodens 12 eingedrückt.

Durch Einarbeiten des Substrates 16 entsteht eine Mischungsschicht 20 aus anstehendem Bodenmaterial und aus Bodenverbesserungssubstrat 16.

Bei gleichmäßigem Verdichten und Einarbeiten des Substrates 16 in den Boden 12 entsteht eine mehr oder weniger scharfe Trennlinie 22, entlang derer später das fertige Vegetationselement 10 maschinell geschält und damit geerntet werden kann.

In der Zeichnung ist eine zweikeimblättrige Pflanze 18 dargestellt, welche aus in die Mischungsschicht 24 eingebrachtem keimfähigen Pflanzenmaterial entstanden ist. Die Wurzeln der Pflanze 18 verankern sich durch die Maschen des PP-Netzes 28 und durch das Substrat 16.

In der Zeichnung ist ferner zu erkennen, daß unterhalb der Trennlinie 22 eine Schicht des unvermischten Bodens 26 verbleibt. In diese Schicht unvermischten Bodens 26 ist kein Substrat 16 eingedrungen, welches den pH-Wert dieses unvermischten Bodens 26 in irgendeiner Weise negativ beeinflussen könnte.

## Patentansprüche

1. Vegetationselement (10) zur Begrünung künstlicher oder natürlicher Flächen mit zweikeimblättrigen Pflanzen (18), bestehend aus einem Träger (14), Bodenverbesserungssubstrat (16) und zweikeimblättrigen Pflanzen (18), wobei das Vegetationselement (10) aufrollbar ausgebildet ist, **dadurch gekennzeichnet, daß** der Träger (14) ein Netz (28), ein Gewebe, ein Gewirke, eine Wirrlage oder ein Fasergemisch ist, welcher mit dem Bodenverbesserungssubstrat (16) in einen natürlich gewachsenen oder künstlich hergestellten, mineralischen Boden (12) eingearbeitet ist, wobei der Boden (12) keimfrei hergerichtet ist, und daß das Bodenverbesserungssubstrat (16) mit Druck oder durch Vermischung in eine obere Schicht (24) des Bodens (12) eingearbeitet ist, wobei der pH-Wert des Substrats (16) vom pH-Wert des Bodens (12) abweichen kann und auf die physiologischen Bedürfnisse der zweikeimblättrigen Pflanzen (18) abgestimmt ist, so daß eine Mischungsschicht (20) aus Boden (12) und Substrat (16) entsteht, und daß in die Mischungsschicht (20) keimfähiges Pflanzenmaterial der zweikeimblättrigen Pflanzen (18) eingebracht ist, deren sich bildende Wurzeln sich in der Mischungsschicht (20) und am Träger (14) verankern, und daß das Vegetationselement (10) maschinell schälbar ist.

2. Vegetationselement nach Anspruch 1, **dadurch gekennzeichnet, daß** den Pflanzen (18) sporenbildende Pflanzen, wie Moose und Farne, beigemischt sind.

3. Vegetationselement nach Anspruch 1 oder 2, **dadurch gekennzeichnet, daß** den Pflanzen (18) Flechten beigemischt sind.

4. Vegetationselement nach einem der Ansprüche 1 - 3, **dadurch gekennzeichnet, daß** den Pflanzen (18) Monokotyledonen beigemischt sind.

5. Vegetationselement nach einem der Ansprüche 1 - 4, **dadurch gekennzeichnet, daß** die Mischungsschicht (20) eine Dicke von 1 cm bis 3 cm aufweist.

6. Vegetationselement nach einem der Ansprüche 1 bis 5, **dadurch gekennzeichnet, daß** der Träger (14) aus verrottbarem Material besteht.

7. Vegetationselement nach einem der Ansprüche 1 bis 6, **dadurch gekennzeichnet, daß** der Träger aus Kunststoff besteht.

8. Vegetationselement nach einem Ansprüche 1 bis 7, **dadurch gekennzeichnet, daß** das Substrat (16) eine unter dem Handelsnamen Bio-Stucco erhältliche Substratmischung ist.

9. Vegetationselement nach einem Ansprüche 1 bis 8, **dadurch gekennzeichnet, daß** die Korngrößenfraktionen des Substrates (16) im Bereich von 0,006 bis 35 mm liegen.

10. Vegetationselement nach einem der Ansprüche 1 bis 9, **dadurch gekennzeichnet, daß** der Boden (12) ein Braunerdeboden ist.

11. Verfahren zur Herstellung eines Vegetationselements (10) nach Anspruch 1, **gekennzeichnet durch** die folgenden Verfahrensschritte:
a) der anstehende Boden (12) wird verdichtet,
b) der Boden (12) wird keimfrei hergerichtet,
c) der Träger (14) wird auf den Boden (12) aufgelegt,
d) Substrat (16) wird auf den Träger (14) und den Boden (12) aufgeschüttet,
e) das Substrat (16) wird unter Druck mit dem Träger (14) in den Boden (12) eingearbeitet und verdichtet,
f) das keimfähige Pflanzenmaterial der zweikeimblättrigen Pflanzen (18) wird eingesät oder aufgestreut,
g) das Vegetationselement (10) wird gärtnerisch gepflegt,
h) das Vegetationselement (10) wird maschinell geschält.

12. Verfahren nach Anspruch 11, **dadurch gekennzeichnet, daß** der Boden (12) mit einem unter dem Handelsnamen Basamid bekannten Mittel keimfrei gemacht wird.

13. Verfahren nach Anspruch 11 oder 12, **dadurch gekennzeichnet, daß** das Substrat (16) 1 bis 2 cm tief in den Boden (12) eingearbeitet und verdichtet wird.

14. Verfahren zur Herstellung eines Vegetationselements (10) nach Anspruch 1, **gekennzeichnet durch** die folgenden Verfahrensschritte:
a) der anstehende Boden (12) wird verdichtet,
b) der Boden (12) wird keimfrei hergerichtet,
c) Substrat (16) wird auf den Boden (12) aufgeschüttet,
d) das Substrat (16) wird in den Boden (12) eingearbeitet und verdichtet,
e) der Träger (14) wird auf den Boden (12) aufgelegt und eingearbeitet,
f) das keimfähige Pflanzenmaterial der zweikeimblättrigen Pflanzen (18) wird eingesät oder aufgestreut,
g) das Vegetationselement (10) wird gärtnerisch gepflegt,
h) das Vegetationselement (10) wird maschinell geschält.

15. Verfahren nach Anspruch 14, **dadurch gekennzeichnet, daß** der Träger (14) mechanisch in die darunter befindliche Schicht (16) eingearbeitet wird.

16. Verfahren nach Anspruch 14 oder 15, **dadurch gekennzeichnet, daß** der Träger (14) durch Ausstreuen einer Schicht von Substrat (16) festgelegt wird.

## Claims

1. Vegetation element (10) for seeding of artificial or natural surfaces with bicotyledonic plants (18), consisting of a carrier (14), soil improvement substrate (16) and bicotyledonic plants (18), where the vegetation element (12) is formed rollable, **characterised in that** the carrier (14) is a net (28), a fabric or textile, a felted layer or a fibre mixture which is worked with the soil improvement substrate (16) into a naturally grown or artificially produced mineral soil (12), where the soil (12) is prepared seed-free, and that the soil improvement substrate (16) is worked by pressure or by mixing into a top layer (24) of the soil (12), where the pH value of the substrate (16) may differ from the pH value of the soil (12) and is matched to the physiological requirements of the bicotyledonic plants (18), so that a mixing layer (20) of the soil (12) and substrate (16) occurs, and that into the mixing layer (20) is introduced germinatable plant material of the bicotyledonic plants (18), the forming roots of which can anchor in the mixing layer (20) and on the carrier (14), and that the vegetation element (12) can be pared mechanically.

2. Vegetation element according to claim 1, **characterised in that** mixed into the plants (18) are sporulate plants such as mosses and ferns.

3. Vegetation element according to claim 1 or 2, **characterised in that** braids are mixed between the plants (18).

4. Vegetation element according to any of claims 1 to 3, **characterised in that** monocotyledons are mixed in with the plants (18).

5. Vegetation element according to any of claims 1 to 4, **characterised in that** the mixing layer (20) has a thickness of 1 cm to 3 cm.

6. Vegetation element according to any of claims 1 to 5, **characterised in that** the carrier (14) consists of degradable material.

7. Vegetation element according to any of claims 1 to 6, **characterised in that** the carrier consists of plastic.

8. Vegetation element according to any of claims 1 to 7, **characterised in that** substrate (6) is a substrate mixture available under the commercial name Bio-Stucco.

9. Vegetation element according to any of claims 1 to 8, **characterised in that** the grain size fraction of the substrate (16) lies in the range from 0.006 to 35 mm.

10. Vegetation element according to any of claims 1 to 9, **characterised in that** the soil (12) is a brown earth soil.

11. Process for production of a vegetation element (10) according to claim 1, **characterised by** the following process steps:
a) the existing soil (12) is compacted,
b) the soil (12) is prepared seed-free,
c) the carrier (14) is laid on the soil (12),
d) the substrate (16) is shaken onto the carrier (14) and soil (12),
e) the substrate (16) is worked under pressure with the carrier (14) into the soil (12) and compacted,
f) the germinatable plant material of the bicotyledonic plants (18) is sown or scattered thereon,
g) the vegetation element (10) is cultivated,
h) the vegetation element (10) is mechanically pared.

12. Process according to claim 11, **characterised in that** the soil (12) is made seed-free with a medium known under the commercial name Basamid.

13. Process according to any of claims 11 or 12, **characterised in that** the substrate (16) is worked into the soil (12) 1 to 2 cm deep and compacted.

14. Process for production of a vegetation element (10) according to claim 1, **characterised in** by the following process steps:
a) the existing soil (12) is compacted,
b) the soil (12) is prepared seed-free,
c) the substrate (16) is shaken onto the soil (12),
d) the substrate (16) is worked into the soil (12) and compacted,
e) the carrier (14) is laid on the soil (12) and worked in,
f) the germinatable plant material of the bicotyledonic plants (18) is sown or scattered thereon,
g) the vegetation element (10) is cultivated,
h) the vegetation element (10) is mechanically pared.

15. Process according to claim 14, **characterised in that** the carrier (14) is worked mechanically in the underlying layer (16).

16. Process according to claim 14 or 15, **characterised in that** the carrier (14) is established by scattering a layer of substrate (16).

## Revendications

1. Elément de végétation (10) destiné au gazonnement de surfaces artificielles ou naturelles avec des plantes dicotylédones (18), composé d'un support (14), d'un substrat d'amélioration du sol (16) et de plantes dicotylédones (18), l'élément de végétation (10) étant conçu enroulable, **caractérisé en ce que** le support (14) est un filet (28), un tissu, un maillage, une couche de fibres embrouillées ou un mélange de fibres, qui est incorporé ensemble avec le substrat d'amélioration du sol (16) dans un sol minéral de formation naturelle ou de fabrication artificielle, le sol (12) étant stérilisé, **en ce que** le substrat d'amélioration du sol (16) est incorporé par pression ou par mélange dans une couche supérieure (24) du sol (12), la valeur pH du substrat (16) pouvant être différente de la valeur pH du sol (12) et adaptée aux besoins physiologiques des plantes dicotylédones (18), de façon à obtenir une couche de mélange (20) constituée de sol (12) et de substrat (16), **en ce que** dans la couche de mélange (20) est introduite une matière végétale genninative de plantes dicotylédones (18), dont les racines en formation s'ancrent dans la couche de mélange (20) et dans le support (14) et **en ce que** l'élément de végétation (10) est pelable mécaniquement.

2. Elément de végétation suivant la revendication 1, **caractérisé en ce que** des plantes sporulantes, telles que des mousses et des fougères sont mélangées aux plantes (18).

3. Elément de végétation suivant la revendication 1 ou 2, **caractérisé en ce que** des lichens sont mélangés aux plantes (18).

4. Elément de végétation suivant une des revendications 1 à 3, **caractérisé en ce que** des monocotylédones sont mélangés aux plantes (18).

5. Elément de végétation suivant une des revendications 1 à 4, **caractérisé en ce que** la couche de mélange (20) présente une épaisseur comprise entre 1 et 3 cm.

6. Elément de végétation suivant une des revendications 1 à 5, **caractérisé en ce que** le support (14) est dans une matière décomposable.

7. Elément de végétation suivant une des revendications 1 à 6, **caractérisé en ce que** le support est en matière artificielle.

8. Elément de végétation suivant une des revendications 1 à 7, **caractérisé en ce que** le substrat (16) est un mélange de substrat commercialisé sous la désignation de Bio-Stucco.

9. Elément de végétation suivant une des revendications 1 à 8, **caractérisé en ce que** les fractions granulométriques du substrat (16) sont comprises dans une plage allant de 0,006 à 35 mm.

10. Elément de végétation suivant une des revendications 1 à 9, **caractérisé en ce que** le sol (12) est de la terre brune.

11. Elément de végétation suivant la revendication 1, **caractérisé par** les étapes de procédé suivantes :
a) le sol amassé (15) est compacté,
b) le sol (12) est stérilisé,
c) le support (14) est posé sur le sol (12),
d) le substrat (16) est rapporté sur le support (14) et sur le sol (12),
e) le substrat (16) est incorporé dans le sol (12) ensemble avec le support (14), puis compacté,
f) la matière végétale germinative de plantes dicotylédones (18) est semée ou épandue,
g) l'élément de végétation (10) fait l'objet de soins culturaux,
h) l'élément de végétation (10) est pelé mécaniquement.

12. Procédé suivant la revendication 11, **caractérisé en ce que** le sol (12) est stérilisé au moyen d'un produit connu sous la désignation de « Basamid ».

13. Procédé suivant la revendication 11 ou 12, **caractérisé en ce que** le substrat (16) est incorporé dans le sol (12) jusqu'à une profondeur de 1 à 2 cm, puis compacté.

14. Procédé de fabrication d'un élément de végétation (10) suivant la revendication 1, **caractérisé par** les étapes de procédé suivantes :
a) le sol amassé (12) est compacté,
b) le sol (12) est stérilisé,
c) le substrat (16) est rapporté sur le sol (12),
d) le substrat (16) est incorporé dans le sol (12), puis compacté,
e) le support (14) est posé sur le sol (12) et incorporé,
f) la matière végétale germinative de plantes dicotylédones (18) est semée ou épandue,
g) l'élément de végétation (10) fait l'objet de soins culturaux,
h) l'élément de végétation (10) est pelé mécaniquement.

15. Procédé suivant la revendication 14, **caractérisé en ce que** le support 14 est incorporé mécaniquement dans la couche (16) sous-jacente.

16. Procédé suivant la revendication 14 ou 15, **caractérisé en ce que** le support (14) est fixé par la couche de substrat (16) rapportée.
